# EUROPÄISCHE PATENTSCHRIFT

(11) **EP 0 711 626 B1**
(45) Veröffentlichungstag und Bekanntmachung des Hinweises auf die Patenterteilung: **08.07.1998**
(21) Anmeldenummer: 95116229.6
(22) Anmeldetag: 14.10.1995
(51) Int. Cl.: B23K 20/10

(54) **Vorrichtung zum Ultraschallbearbeiten eines Werkstücks**
Device for the ultrasonic machining of a workpiece
Dispositif pour l'usinage d'une pièce par ultrason

(30) Priorität: 08.11.1994 DE 4439470
(43) Veröffentlichungstag der Anmeldung: 15.05.1996
(73) Patentinhaber: Herrmann Ultraschalltechnik GmbH & Co. KG, 76307 Karlsbad-Ittersbach (DE)
(72) Erfinder: Herrmann, Walter, D-76307 Karlsbad-Ittersbach (DE)
(74) Vertreter: Dreiss, Fuhlendorf, Steimle & Becker, Patentanwälte

(56) Entgegenhaltungen:
- CH-A- 625 429
- DE-A- 3 218 920
- DE-A- 3 342 619
- DE-U- 8 022 808
- GB-A- 2 127 587
- US-A- 4 549 684
- JAPANESE JOURNAL OF APPLIED PHYSICS, PROC. 12TH SYMP. ON ULTRASONIC ELECTRONICS 31 (1992) SUPPL. 31-1, YOKOHAMA JA, Seiten 287-289, XP 000322518 JIROMARU TSUJINO ET AL. 'Ultrasonic Welding of Thin Metal Plates Using a Complex Vibration Welding Tip'
- PATENT ABSTRACTS OF JAPAN vol. 13 no. 28 (M-788) [3376] ,23.Januar 1989 & JP-A-63 242479 (JIROMARU TSUJINO) 7.Oktober 1988,

## Beschreibung

Die Erfindung betrifft eine Vorrichtung zum Ultraschallbearbeiten eines Werkstücks gemäß dem Oberbegriff des Anspruchs 1 (siehe DE-A-3342619).

Derartige Vorrichtungen, in der Regel Ultraschweißanlagen genannt, sind in einer Vielzahl bekannt. Dabei liegt das zu verschweißende bzw. das zu bearbeitende Werkstück zwischen einer Sonotrode und einem Gegenwerkzeug. Die Sonotrode wird von einem Antrieb in Schwingung versetzt und überträgt beim Anpressen des Werkstücks die notwendige Schweißenergie. Der Antrieb besteht in der Regel aus einem piezoelektrischen Konverter und gegebenenfalls einem zwischen dem Konverter und der Sonotrode angeordneten Amplitudentransformationsstück. Der piezoelektrische Konverter erzeugt eine hochfrequente Schwingung mit einer bestimmten Amplitude. Diese Amplitude kann in dem Amplitudentransformationsstück, z.B. im Verhältnis 1:2 erhöht werden. Diese erhöhte Amplitude liegt am Sonotrodeneingang an und wird in der Regel in der Sonotrode nochmals erhöht. Liegt die Sonotrode am Werkstück an, dann erzeugt die Ausgangsamplitude eine hochfrequente Schwingung der Moleküle des zu verschweißenden Materials. Durch innere Reibung und Grenzflächenreibung erwärmt sich das Material bis zum Erweichungspunkt, so daß es mit dem ebenfalls erweichten anliegenden Bauteil verschmilzt.

Es hat sich gezeigt, daß mit derartigen Ultraschall-Schweißanlagen Bauteile effektiv miteinander verschweißt werden können. Neben dem Verschweißen ist auch das Nieten und das Einsenken sowie das Schneiden bzw. Trennen bekannt. In allen Fällen ist jedoch die Größe des Bauteils durch die Größe der Sonotrode beschränkt. Überschreitet die Sonotrode eine bestimmte Größe, dann schwingt diese nur noch in einem begrenzten Bereich mit der vorgegebenen bzw. gewünschten Amplitude, wobei dieser Bereich in der Regel in der Nähe des Verankerungspunkts des piezoelektrischen Konverters bzw. des Amplitudentransformationsstücks liegt. Die außerhalb liegenden Bereiche schwingen zwar ebenfalls, jedoch mit einer deutlich reduzierten Amplitude. Wird eine derartige Sonotrode auf zwei miteinander zu verschweißenden Bauteilen aufgesetzt, dann werden diese zwar in dem Bereich zuverlässig miteinander verschweißt, in dem die Sonotrode mit der vorgegebenen bzw. gewünschten Amplitude schwingt, außerhalb dieses Bereichs erfolgt eine ungenügende oder keine Verschweißung. Wird die Amplitude so weit angehoben, daß der äußere Bereich mit der gewünschten Amplitude schwingt, dann ist die Amplitude im inneren Bereich so hoch, daß dort Überschweißungen und Brandflecken am anliegenden Bauteil auftreten. Insgesamt kann also festgestellt werden, daß derart große Sonotroden zu Schweißzwecken nicht geeignet sind. Mitunter können zu große Sonotroden gar nicht erregt werden.

In Kenntnis dieses Nachteils wurde versucht, große Bauteile mit mehreren Sonotroden gleichzeitig zu verschweißen DE-A-3342619, wobei hier der Nachteil auftritt, daß im Übergangsbereich von der einen zur anderen Sonotrode Oberflächenverformungen am Bauteil auftreten. Dies ist insbesondere bei hochwertigen Bauteilen oder Sichtflächen unerwünscht.

Zwar ist aus der CH-A-625429 ein Ultraschallschweißwerkzeug bekannt geworden bei dem eine Sonotrode mittels zwei Konvertern angetrieben wird, jedoch münden diese beiden Konverter in einen gemeinsamen Amplitudenverstärker, der wiederum in einer weiteren Amplitudenverstärker mündet, wobei dieser die Sonotrode antreibt. Mit dieser Ausgestaltung wird lediglich die Schweißleistung der Sonotrode erhöht. Die Nachteile, die große Sonotroden mit sich bringen, werden durch diese Anordnung nicht gelöst.

Der Erfindung liegt somit die Aufgabe zugrunde, eine Vorrichtung der eingangs genannten Art so weiterzubilden, daß mit ihr auch große Bauteile geschweißt werden können.

Diese Aufgabe wird erfindungsgemäß durch die Merkmale des Anspruchs 1 gelöst.

Die erfindungsgemäße Ausgestaltung sieht also vor, daß eine einzige Sonotrode nicht von einem einzigen Antrieb angetrieben wird, sondern mindestens zwei Ultraschallschwingeinheiten aufweist, die die Sonotrode zum Schwingen anregen. Diese Ausgestaltung hat den wesentlichen Vorteil, daß die Amplitudenverteilung in der Sonotrode wesentlich homogener ist als beim bekannten Stand der Technik. Außerdem besitzt die Sonotrode eine insgesamt höhere Ausgangsamplitude. Ferner kann durch den Einsatz mehrerer Ultraschallschwingeinheiten die Leistung vervielfacht werden. Es können also relativ große Bauteile problemlos miteinander verschweißt werden, wobei die Sonotrode derart mit Ultraschallschwingeinheiten bestückt ist, daß die Ausgangsamplitude der Sonotrode im wesentlichen gleich ist. Die Ultraschallschwingeinheiten können dabei gleich ausgebildet sein, d.h. die gleiche Leistung besitzen, sie können jedoch auch unterschiedlicher Leistung sein, wobei dann die Anordnung der Ultraschallschwingeinheiten an der Sonotrode entsprechend gewählt ist.

Gemäß der Erfindung sind die Ultraschallschwingeinheiten an einem gemeinsamen Ultraschall-Generator angeschlossen. Somit ist sichergestellt, daß die Ultraschallschwingeinheiten mit der gleichen Frequenz schwingen und die Sonotrode gleichmäßig angeregt wird.

Bei einer anderen Ausführungsform sind die einzelnen Ultraschallschwingeinheiten an mehrere Ultraschall-Generatoren angeschlossen, wobei die Ultraschall-Generatoren nach Vorgabe einer Steuerfrequenz gleichmäß schwingen und auf diese Weise die einzelnen Ultraschallschwingeinheiten gleichmäßig anregen.

Bei einer besonders bevorzugten Ausführungsform weisen die Ultraschallschwingeinheiten piezoelektrische Konverter auf, deren Resonanzfrequenz im wesentlichen gleich ist. Durch diese Maßnahme arbeiten die einzelnen Ultraschallschwingeinheiten in ihrem optimalen Arbeitsbereich und erzeugen die maximale Amplitude.

Ein weites Einsatzgebiet wird dadurch eröffnet, daß die Sonotrode einen unregelmäßigen Querschnitt aufweist. Auf dieser Sonotrode, die im allgemeinen eine unregelmäßige Geometrie besitzt, können nun gezielt die Ultraschallschwingeinheiten derart plaziert werden, daß die Ausgangsamplitude über die gesamte Fläche der Sonotrode gleich bzw. in einem sehr engen Band liegt. Auf diese Weise können nun auch unregelmäßig geformte bzw. gebogene Werkstücke bearbeitet werden.

Bei einer anderen Ausführungsform weist die Sonotrode einen Absatz an ihrer Schweißspitze bzw. Schweißfläche auf. Mit einer derartigen Sonotrode können zum Beispiel Bauteile bearbeitet bzw. miteinander verschweißt werden, deren Bearbeitungsflächen auf unterschiedlichen Höhen liegen. Der Absatz kann dabei sprunghaft ausgebildet sein. Es werden jedoch Absätze bevorzugt, die einen allmählichen Übergang von der einen in die andere Ebene besitzen.

Bei einem besonders bevorzugten Ausführungsbeispiel sind die Ultraschallschwingeinheiten parallel geschaltet. Es ist jedoch auch denkbar, daß die Ultraschallschwingeinheiten in Serie geschaltet sind, bzw. mehrere Ultraschallschwingeinheiten über eine Serien-Reihen-Schaltung miteinander gekoppelt sind.

Eine Ausgestaltung sieht vor, daß die Ultraschallschwingeinheiten piezoelektrische Schwingmodule aufweisen, die in einem gemeinsamen Konvertergehäuse angeordnet sind. Hierdurch wird der Bauaufwand reduziert, und die einzelnen Ultraschallschwingeinheiten können dichter gepackt werden.

Eine Optimierung bzw. gleichmäßigere Amplitudenverteilung am Ausgang der Sonotrode wird dadurch erreicht, daß die Ultraschallschwingeinheiten einzeln ansteuerbar sind.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im einzelnen dargestellt ist. Dabei zeigen:
- Figur 1: eine perspektivische Ansicht einer ersten Ausführungsform der Erfindung mit einer Sonotrode und zwei Antrieben;
- Figur 2: eine Draufsicht auf eine Sonotrode einer anderen Ausführungsform mit drei Antrieben; und
- Figur 3: eine perspektivische Ansicht einer weiteren Ausführungsform einer Sonotrode mit in verschiedenen Ebenen liegendem Ausgang.

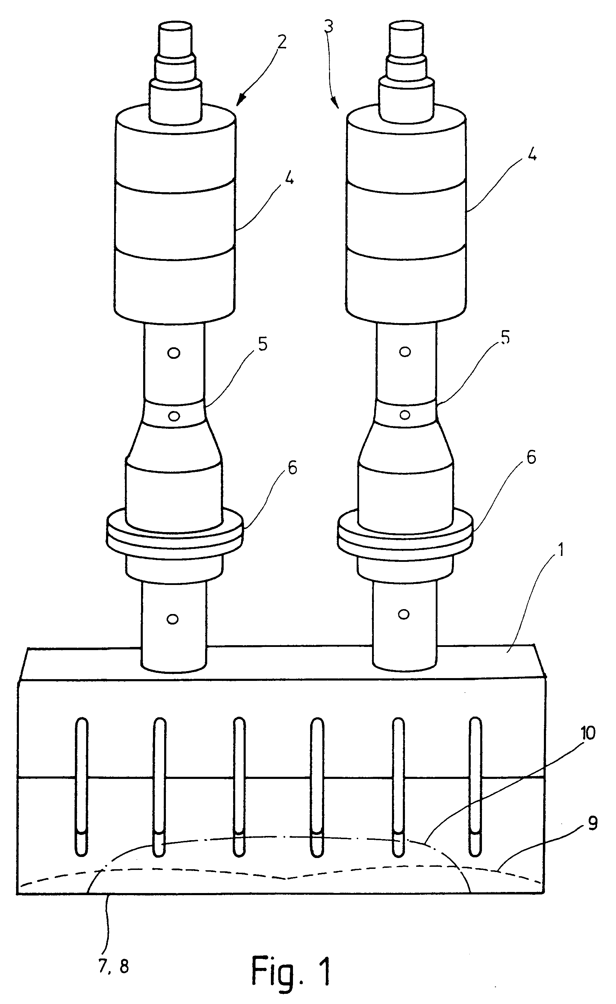

In der Figur 1 ist eine Ultraschall-Schweißanlage dargestellt, die eine sehr große Sonotrode 1 aufweist, an der zwei insgesamt mit 2 und 3 bezeichnete Ultraschallschwingeinheiten befestigt sind. Die beiden Ultraschallschwingeinheiten 2 und 3 bilden den Antrieb für die Sonotrode 1. Jede Ultraschallschwingeinheit 2 bzw. 3 weist einen piezoelektrischen Konverter 4, ein am Ausgang des Konverters 4 befestigtes Amplitudentransformationsstück 5 sowie einen Haltering 6 auf, an dem die beiden Ultraschallschwingeinheiten 2 und 3 in der Regel eingespannt werden. Die beiden Ultraschallschwingeinheiten 2 und 3 sind derart an der Sonotrode 1 befestigt, daß am Ausgang 7 der Sonotrode 1, d.h. an der Arbeitsfläche 8 eine im wesentlichen gleichmäßige Amplitudenverteilung vorherrscht. Diese Amplitudenverteilung ist schematisch mit einer gestrichtelten Linie 9 dargestellt.

Die in Figur 1 dargestellte Schweißeinheit hat den wesentlichen Vorteil, daß, wie bereits erwähnt, am Ausgang 7 der Sonotrode 1 ein wesentlich gleichmäßigerer Amplitudenverlauf vorherrscht und deshalb die Sonotrode 1 über ihre gesamte Länge nutzbar ist. Außerdem können die Ultraschallschwingeinheiten 2 und 3 jeweils eine geringere Arbeitsleistung aufweisen, als bei einer Vorrichtung mit einer einzigen Ultraschallschwingeinheit. Bei einer derartigen Vorrichtung wäre diese einzige Ultraschallschwingeinheit in der Mitte der Oberseite der Sonotrode 1 befestigt und der Amplitudenverlauf am Ausgang 7 würde so verlaufen, wie mit der strichpunktierten Linie 10 angedeutet ist. Es ist deutlich sichtbar, daß der Verlauf der Linie 9 über die Länge der Sonotrode 1 wesentlich gleichmäßiger ist als der Verlauf der Linie 10. Mit der erfindungsgemäßen Vorrichtung sind über die gesamte Länge einheitliche Verschweißungen bzw. Vernietungen oder Einsenkungen möglich, wohingegen beim Stand der Technik im äußeren Bereich keine oder nur ungenügende Schweißungen erzielbar und im mittleren Bereich ein Überschweißen bzw. Brandflecken zu befürchten sind.

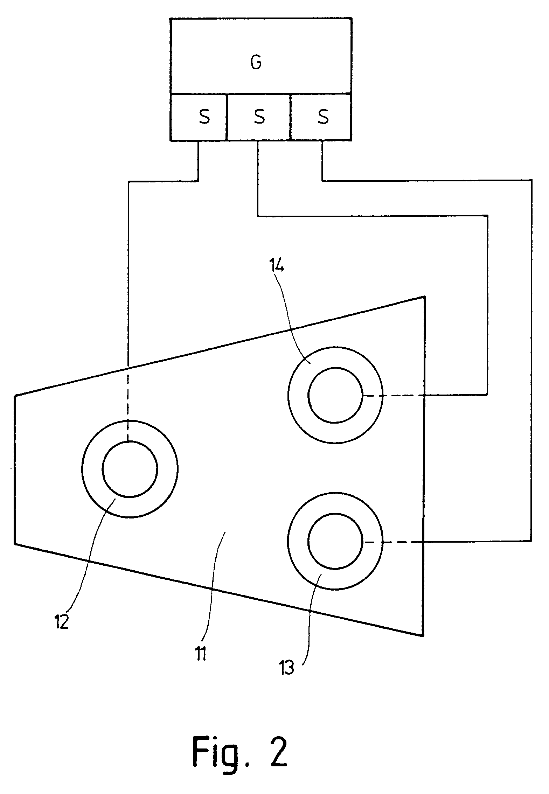

In der Figur 2 ist eine weitere Anordnung in Draufsicht dargestellt, wobei die Sonotrode 11 eine unregelmäßige Geometrie, im vorliegenden Fall eine Keilform aufweist. Der Antrieb dieser Sonotrode 11 besteht bei diesem Ausführungsbeispiel aus drei Ultraschallschwingeinheiten 12 bis 14, die jedoch nur schematisch dargestellt sind. Diese Ultraschallschwingeinheiten 12 bis 14 sind an einen gemeinsamen Generator G angeschlossen, können jedoch über eine jeweils eigene Steuereinheit S angesteuert sein. Auf diese Weise wird die Möglichkeit geschaffen, daß die Leistungsabgabe einer jeden Ultraschallschwingeinheit 12 bis 14 gezielt beeinflußbar ist und auf diese Weise am Ausgang der Sonotrode eine gleichmäßige Amplitudenverteilung bereitgestellt wird.

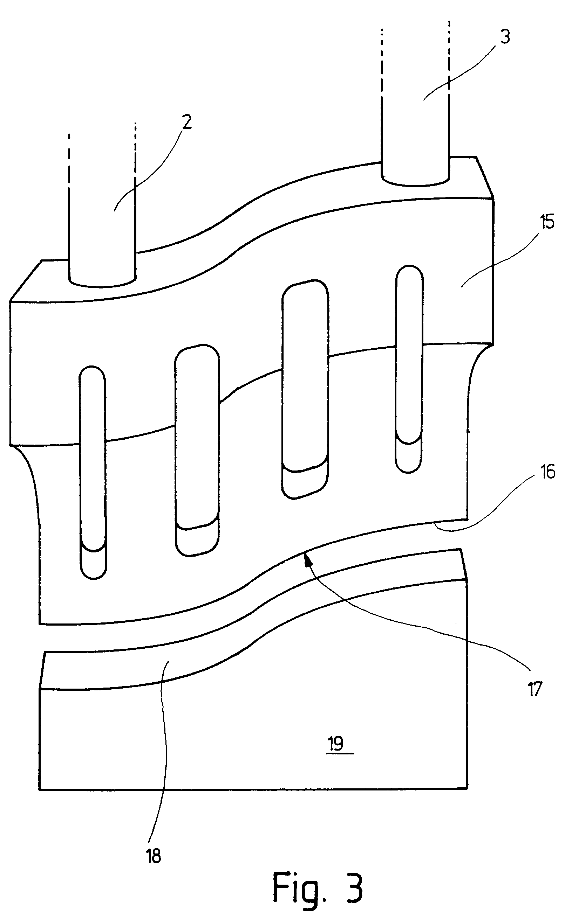

In der Figur 3 ist eine weitere Sonotrode 15 dargestellt, deren Arbeitsfläche 16 mit einem Absatz 17 versehen ist, so daß die Arbeitsfläche 16 einen gebogenen Verlauf einnimmt. Mit einer derartigen Sonotrode 15 können gekrümmte Bauteile 18 und 19 miteinader verschweißt werden. Die in der Figur 3 dargestellte Sonotrode 15 ist mit zwei andeutungsweise wiedergegebenen Ultraschallschwingeinheiten 2 und 3 bestückt, sie kann jedoch auch mit mehreren Ultraschallschwingeinheiten versehen sein.

Sonotroden 15 mit mehreren Antrieben bzw. Ultraschallschwingeinheiten 2 und 3 können den gleichen Höhenversatz an der Arbeitsfläche aufweisen wie Sonotroden mit einem Antrieb. Auf jeden Fall können Sie länger und/oder breiter sein als herkömmliche Sonotroden. Unter Umständen kann sogar der Höhenversatz größer sein.

## Patentansprüche

1. Vorrichtung zum Ultraschallbearbeiten eines Werkstücks, wobei die Vorrichtung eine Sonotrode (1, 11, 15) und einen Antrieb für die Sonotrode aufweist, sowie wenigstens zwei Ultraschallschwingeinheiten (2 und 3; 12 bis 14), die jeweils einen Konverter (4) aufweisen und im wesentlichen parallel zueinander ausgerichtet sind, dadurch gekennzeichnet, daß die Ultraschallschwingeinheiten (2 und 3; 12 bis 14) von einem einzigen Ultraschall-Generator (6) angetrieben werden und den Antrieb für eine einzige Sonotrode (1, 11, 15) bilden.

2. Vorrichtung nach Anspruch 1, dadurch gekennzeichnet, daß die Ultraschallschwingeinheiten (2 und 3; 12 bis 14) piezoelektrische Konverter (4) aufweisen, deren Resonanzfrequenz im wesentlichen gleich ist.

3. Vorrichtung nach einem der vorhergehenden Ansprüche, dadurch gekennzeichnet, daß die Sonotrode (11) einen unregelmäßigen Querschnitt aufweist.

4. Vorrichtung nach einem der vorhergehenden Ansprüche, dadurch gekennzeichnet, daß die Sonotrode (15) einen Absatz an ihrer Schweißspitze bzw. -fläche (16) aufweist.

5. Vorrichtung nach einem der vorhergehenden Ansprüche, dadurch gekennzeichnet, daß die Sonotrode (11, 15) eine unregelmäßige Geometrie aufweist.

6. Vorrichtung nach einem der vorhergehenden Ansprüche, dadurch gekennzeichnet, daß die Ultraschallschwingeinheiten (2 und 3; 12 bis 14) parallel geschaltet sind.

7. Vorrichtung nach einem der vorhergehenden Ansprüche, dadurch gekennzeichnet, daß die Ultraschallschwingeinheiten piezoelektrische Schwingmodule (4) aufweisen, die in einem gemeinsamen Konvertergehäuse angeordnet sind.

8. Vorrichtung nach einem der vorhergehenden Ansprüche, dadurch gekennzeichnet, daß die Ultraschallschwingeinheiten (2 und 3; 12 bis 14) einzeln ansteuerbar sind.

## Claims

1. A device for ultrasound treatment of a workpiece, where the device features a sonotrode (1, 11, 15) and a drive unit for the sonotrode, as well as at least two ultrasound oscillation units (2 and 3; 12 to 14) each having a converter (4) and being arranged substantially parallel to each other, characterized in that the ultrasound oscillating units (2 and 3; 12 to 14) are driven by a single ultrasound generator (G) and forming the drive unit for a single sonotrode (1, 11, 15).

2. The device according to Claim 1, characterized in that the ultrasound oscillating units (2 and 3; 12 to 14) feature piezoelectric converters (4) whose resonant frequency is essentially the same.

3. The device according to one of the preceding claims, characterized in that the sonotrode (11) features an irregular cross section.

4. The device according to one of the preceding claims, characterized in that the sonotrode (15) features a recess at its welding tip or surface (16).

5. The device according to one of the preceding claims, characterized in that the sonotrode (11, 15) features an irregular geometry.

6. The device according to one of the preceding claims, characterized in that the ultrasonic oscillating units (2 and 3; 12 to 14) are connected in parallel.

7. The device according to one of the preceding claims, characterized in that the ultrasound oscillating units feature piezoelectric oscillating modules (4) that are located in a common converter housing.

8. The device according to one of the preceding claims, characterized in that the ultrasound oscillating units (2 and 3; 12 to 14) can be individually controlled.

## Revendications

1. Dispositif pour l'usinage d'une pièce par ultrasons, dans lequel le dispositif présente une sonotrode (1, 11, 15) et un dispositif de commande de la sonotrode, ainsi qu'au moins deux unités émettrices d'ultrasons (2 et 3 ; 12 à 14) qui présentent chacune un convertisseur (4) et sont essentiellement orientées parallèlement l'une à l'autre, caractérisé en ce que la unités émettrices d'ultrasons (2 et 3 ; 12 à 14) sont commandées par un générateur unique d'ultrasons (6) et forment la commande d'une sonotrode (1, 11, 15) unique.

2. Dispositif selon la revendication 1, caractérisé en ce que les unités émettrices d'ultrasons (2 et 3 ; 12 à 14) présentent des convertisseurs piézo-électriques (4), dont la fréquence de résonance est essentiellement identique.

3. Dispositif selon l'une des revendications précédentes, caractérisé en ce que la sonotrode (11) présente une coupe transversale irrégulière.

4. Dispositif selon l'une des revendications précédentes, caractérisé en ce que la sonotrode (15) présente un décrochement au niveau de son extrémité ou de sa surface de soudure (16).

5. Dispositif selon l'une des revendications précédentes, caractérisé en ce que la sonotrode (11, 15) présente une forme géométrique irrégulière.

6. Dispositif selon l'une des revendications précédentes, caractérisé en ce que les unités émettrices d'ultrasons (2 et 3 ; 12 à 14) sont montées en parallèle.

7. Dispositif selon l'une des revendications précédentes, caractérisé en ce que les unités émettrices d'ultrasons présentent des modules oscillateurs piézo-électriques (4), qui sont disposés dans un boîtier de convertisseur commun.

8. Dispositif selon l'une des revendications précédentes, caractérisé en ce que les unités émettrices d'ultrasons (2 et 3 ; 12 à 14) peuvent être commandées individuellement.
